# EUROPÄISCHE PATENTSCHRIFT

(11) **EP 0 949 169 B1**
(45) Veröffentlichungstag und Bekanntmachung des Hinweises auf die Patenterteilung: **21.01.2004**
(21) Anmeldenummer: 99104538.6
(22) Anmeldetag: 06.03.1999
(51) Int. Cl.: B65G 61/00

(54) **Hubvorrichtung (Palettierer) mit Schwenkarm**
Lifting device (palletizer) with a swing arm
Dispositif de levage (palettiseur) avec un bras pivotant

(30) Priorität: 07.04.1998 DE 19815434
(43) Veröffentlichungstag der Anmeldung: 13.10.1999
(73) Patentinhaber: FOCKE & CO., 27283 Verden (DE)
(72) Erfinder: Focke, Heinz, 27283 Verden (DE); Livotov, Pavel Dr., 30159 Hannover (DE)
(74) Vertreter: Bolte, Erich, Dipl.-Ing.

(56) Entgegenhaltungen:
- EP-A- 0 819 627
- DE-A- 2 802 738
- DE-U- 8 512 963
- DE-U- 8 713 515
- US-A- 5 085 556
- US-A- 5 297 924
- PATENT ABSTRACTS OF JAPAN vol. 7, no. 133 (M-221), 10. Juni 1983 (1983-06-10) & JP 58 047725 A (NOMURA SANGYO KK), 19. März 1983 (1983-03-19)

## Beschreibung

Die Erfindung betrifft eine Hubvorrichtung, insbesondere einen Palettierer, mit einem Schwenkarm aus mindestens zwei schwenkbar miteinander verbundenen Teilarmen und einem Hubkopf, insbesondere Saugkopf, am freien Ende des Schwenkarms, wobei ein Tragarm schwenkbar am Ende des Schwenkarms gelagert ist und der Hubkopf über ein Wellenstück drehbar am freien Ende des Tragarms gelagert ist, wobei weiterhin der Hubkopf durch ein Betätigungsorgan drehbar ist.

Palettierer, bei denen an einer aufrechten Tragsäule ein Schwenkarm, insbesondere ein horizontaler Knickarm, angebracht ist, sind vielfach im Einsatz zur Beladung oder Entladung von Paletten mit Großpackungen, insbesondere Kartons. Der horizontale Schwenkarm bzw. Knickarm ist üblicherweise mit drei steuerbaren Drehachsen ausgerüstet und außerdem an der Tragsäule vertikal verfahrbar. Am Ende des Schwenkarms ist ein Werkzeug zur Aufnahme von Lasten angeordnet, insbesondere ein Hubkopf, Saugkopf, Greifer oder dergleichen. Ein derartiger Palettierer ist beispielsweise aus der JP 58047725 A bekannt (siehe auch PATENT ABSTRACTS OF JAPAN vol. 7, no. 133 (M-221), 10. Juni 1983).

Palettierer haben vielfältige Förderarbeiten zu verrichten. Insbesondere fällt in der Praxis die Aufgabe an, ankommende Gegenstände, insbesondere Kartons, unterschiedlicher Größe, Form oder unterschiedlichen Inhalts nach einem besonderen Verteilungsprogramm mehreren Paletten zuzuführen und auf diesen lagenweise und positionsgenau abzusetzen. Hiermit befaßt sich die Erfindung vorrangig.

Die zu lösende Aufgabe besteht darin, einen Palettierer der eingangs genannten Art dahingehend weiterzuentwickeln, daß mit verhältnismäßig einfachen Maßnahmen die Einsetzbarkeit des Palettierers verbessert wird, insbesondere die möglichen Relativstellungen des Aufnahmewerkzeugs bzw. Hubkopfes bei der Aufnahme und/oder beim Absetzen eines Gegenstands.

Zur Lösung dieser Aufgabe ist vorgesehen, dass der Hubkopf durch einen am Tragarm angeordneten Betätigungszylinder drehbar ist, dessen Kolbenstange über einen Schwenkhebel mit dem am Tragarm drehbar gelagerten Wellenstück verbunden ist.

Der Hubkopf ist demnach durch ein einfaches Betätigungsorgan um eine mittlere, aufrechte Achse schwenkbar. Dies erlaubt eine Bewegung des Hubkopfes zwischen zwei Alternativstellungen, die um 90° zueinander versetzt sind, nämlich in Längsrichtung und in Querrichtung zum Tragarm. Hierdurch ist eine einfache, wirkungsvolle Bewegbarkeit des Hubkopfes gewährleistet.

Weitere Einzelheiten und Besonderheiten der erfindungsgemäßen Hubvorrichtung werden nachfolgend anhand eines in den Zeichnungen dargestellten Ausführungsbeispiels näher erläutert. Es zeigt:
- Fig. 1: eine Palettierstation mit Palettierer in schematischer Seitenansicht,

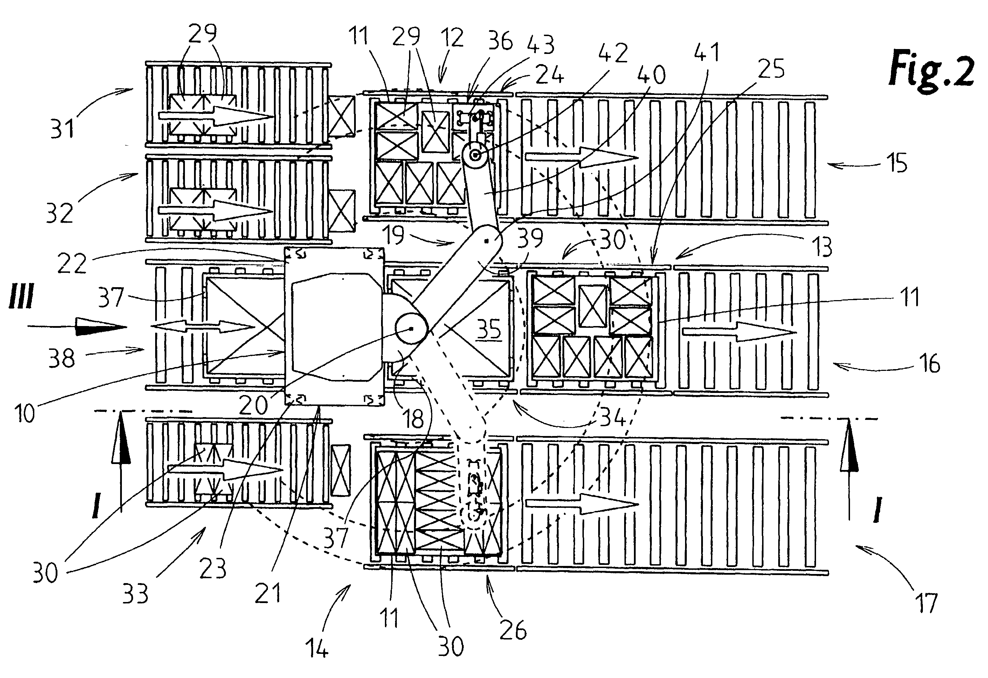

- Fig. 2: die Palettierstation gemäß Fig. 1 im Grundriß,

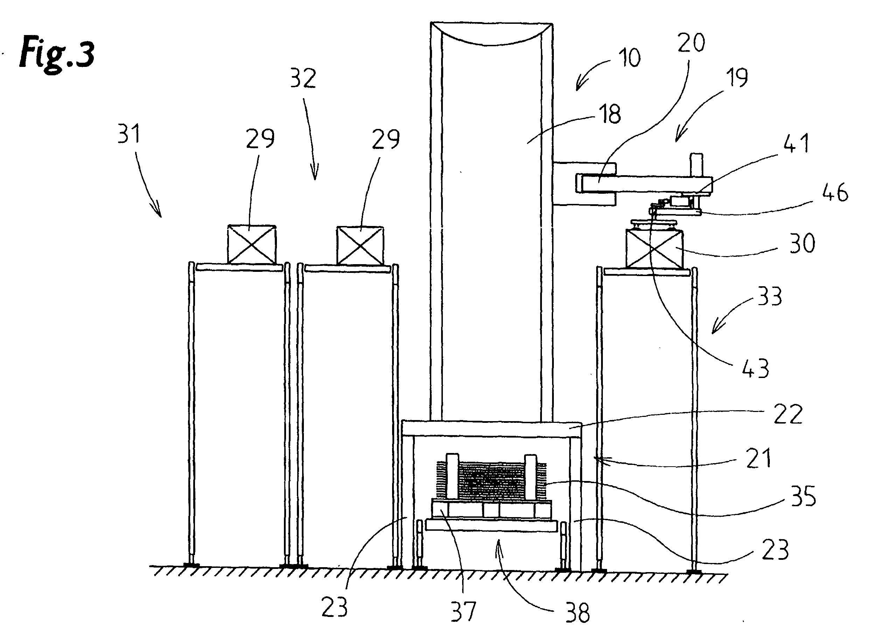

- Fig. 3: eine Ansicht der Palettierstation gemäß Pfeil III in Fig. 2,
- Fig. 4: den Palettierer in einer Arbeitsstellung in Draufsicht, bei vergrößertem Maßstab,
- Fig. 5: eine Darstellung analog zu Fig. 4 bei einer anderen Stellung des Schwenkarms,
- Fig. 6: einen Endbereich des Schwenkarms mit Hubkopf in Seitenansicht,
- Fig. 7: die Einzelheit gemäß Fig. 6 in Draufsicht bzw. Horizontalschnitt gemäß Schnittebene VII-VII in Fig. 6.

Aufbau und Arbeitsweise eines Hubförderers bzw. Palettierers 10 werden in den Zeichnungen anhand einer Palettierstation beschrieben, in der Paletten 11 nach einem vorgegebenen Programm im Bereich von mehreren, nämlich drei Palettenplätzen 12, 13, 14 beladen werden. Jeder Palettenplatz 12, 13, 14 ist einem Abförderer 15, 16, 17 zugeordnet, der die beladenen Paletten 11 vom jeweiligen Palettenplatz 12, 13, 14 abfördert. Die Abförderer 15..17 sind als Rollenbahnen ausgebildet. Es sind demnach drei parallele, im Abstand voneinander angeordnete Rollenbahnen als Abförderer 15, 16, 17 vorgesehen.

Der gemeinsame Palettierer 10 besteht aus einer aufrechten Tragsäule 18, an der ein Ausleger bzw. Schwenkarm 19 auf der den Palettenplätzen 12, 13, 14 zugekehrten Seite gelagert ist. An einer aufrechten Seitenfläche der Tragsäule 18 ist ein gabelförmiges Drehlager 20 für den Schwenkarm 19 angebracht. Das Drehlager 20 und damit der Schwenkarm 19 ist an der feststehenden Tragsäule 18 auf- und abbewegbar.

Die Tragsäule 18 ist unten auf einer Tragkonstruktion abgestützt, bei dem vorliegenden Beispiel auf einem Tisch 21. Dieser besteht aus einer Tragplatte 22 und (vier) Stützen 23 an den Ecken der Tischplatte.

Die Abförderer 15, 16, 17 enden jeweils im Bereich des Palettierers 10, und zwar auf der Seite des Drehlagers 20 für den Schwenkarm 19. Der Palettenplatz 12, 13, 14 wird jeweils aus einer heb- und senkbaren Plattform 24, 25, 26 gebildet am Ende eines zugeordneten Abförderers 15, 16, 17. Die Plattform 24, 25, 26 ist jeweils eine heb- und senkbare Fortsetzung bzw. ein Endabschnitts eines Abförderers 15..17.

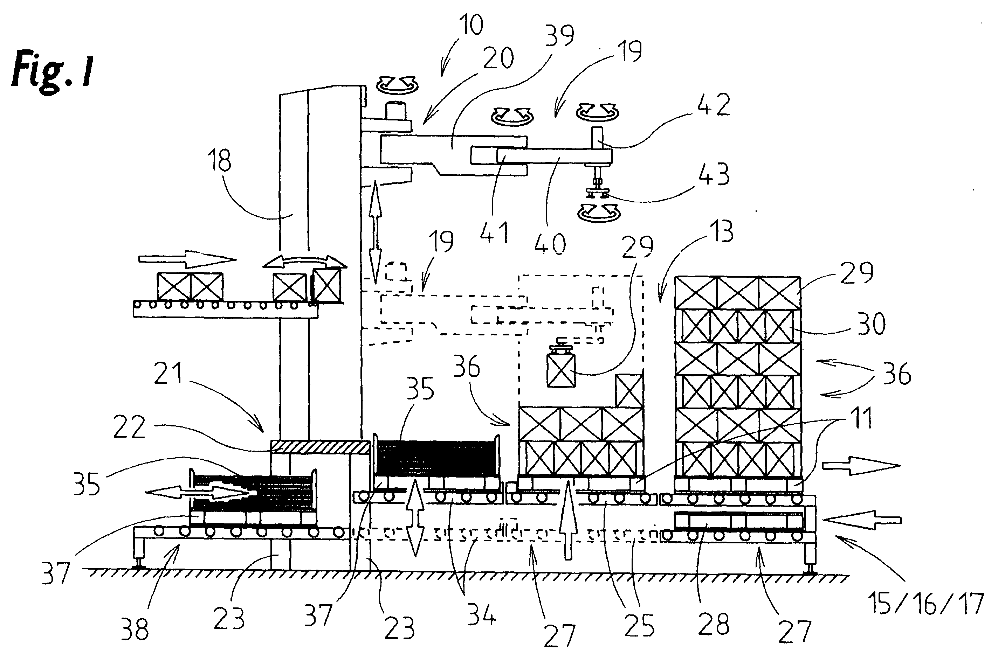

Unterhalb der auf erhöhtem Niveau positionierten Abförderer 15, 16, 17 ist jeweils ein Rückförderer 27 angeordnet. Dieser ist ebenfalls als Rollenförderer ausgebildet und dient zum Rücktransport von leeren Paletten, also von Leerpaletten 28, jeweils zu einem Palettenplatz 12, 13, 14. Zur Aufnahme einer Leerpalette 28 wird die Plattform 24..26 auf die Ebene des Rückförderers 27 abgesenkt. Die Leerpalette 28 wird auf die Plattform 24..26 gefördert und mit dieser auf die Ebene des jeweiligen Abförderers 15..17 angehoben (Fig. 1). In der angehobenen Position bildet die Plattform 24..26 mit der Palette 11 den Palettenplatz 12..14.

Jede Palette 11 ist im Bereich des Palettenplatzes 12, 13, 14 mit Gegenständen zu beladen, im vorliegenden Fall mit (Versand-)Kartons 29, 30. Diese werden im Arbeitsbereich des Palettierers 10 bereitgehalten zur Aufnahme und zum Absetzen auf einer der Paletten 11.

Bei dem gezeigten Ausführungsbeispiel werden Kartons 29, 30 auf Kartonbahnen 31, 32, 33 angeliefert. Auch diese sind als Rollenbahnen ausgebildet. Es sind mehrere, nämlich drei Kartonbahnen 31, 32, 33 vorgesehen, die parallel zueinander verlaufen. Am Ende einer Kartonbahn 31..33 wird jeweils mindestens ein einzelner Karton 29, 30 zur Übernahme durch den Palettierer 10 bereitgehalten auf einer nicht gezeigten Plattform, auf einem Tisch oder unmittelbar auf der Kartonbahn 31..33.

Die Kartonbahnen 31..33 sind in bezug auf den Palettierer 10 in unterschiedlichen Relativstellungen positioniert. Zwei Kartonbahnen 31, 32 sind unmittelbar nebeneinander angeordnet und enden benachbart zum Palettenplatz 12, seitlich neben dem Palettierer 10. Die dritte Kartonbahn 33 ist auf der gegenüberliegenden Seite des Palettierers 10 angeordnet und endet im Bereich des Palettenplatzes 14. Auf den Kartonbahnen 31..33 werden die Kartons 29, 30 in Dichtlage oder auch mit unterschiedlichen Abständen voneinander, jedenfalls unregelmäßig zugeführt. Es kann sich dabei um Kartons 29, 30 unterschiedlicher Größe bzw. unterschiedlichen Formats (quadratisch, rechteckig) handeln.

Die Abförderer 15..17 sind in symmetrischer Relativstellung zum Palettierer 10 angeordnet. Der mittlere Abförderer 16 ist mittig zum Palettierer 10 ausgerichtet, während die beiden anderen Abförderer 15, 17 mit Abstand zu beiden Seiten des Palettierers 10 enden. Aufgrund dieser Relativstellung ist der dem Abförderer 16 zugeordnete Palettenplatz 13 in Abförderrichtung versetzt und mit Abstand vom Palettierer 10 angeordnet. Auch die heb- und senkbare Plattform 25 für diesen Palettenplatz 13 ist gegenüber den Plattformen 24 und 26 in Abförderrichtung versetzt angeordnet.

Dadurch entsteht im Bereich unmittelbar neben dem Palettierer 10 bzw. neben dem Tisch 21 Raum für eine Hilfsplattform 34 für die Bereithaltung von Zwischenlagen 35. Es handelt sich dabei um dünne Zuschnitte, zum Beispiel aus Karton, die zwischen den in Lagen 36 auf den Paletten 11 angeordneten Gegenständen bzw. Kartons 29, 30 positioniert werden. Auf der Hilfsplattform 34 wird ein Vorrat an Zwischenlagen 35 bereitgehalten, und zwar auf einer Lagenpalette 37. Diese wird durch eine Hilfsbahn 38 zugeführt, die sich in Verlängerung des mittleren Abförderers 16 erstreckt, jedoch in der Ebene des Rückförderers 27. Die Hilfsbahn 38 wird unter dem Tisch 21 bzw. unter der Tischplatte 22 hindurchgeführt. Auf der zur Hilfsplattform 34 gegenüberliegenden Seite des Tisches 21 kann eine Lagenpalette 37 mit einem Vorrat an Zwischenlagen 35 beschickt werden. Die Lagen 36 werden jeweils durch den Palettierer 10 von der Lagenpalette 37 abgenommen und auf einer komplettierten Lage 36 einer Palette 11 positioniert.

Der Palettierer 10 ist in besonderer Weise ausgebildet. Der Schwenkarm 19 ist ein in horizontaler Ebene schwenkbarer Knickarm, bestehend aus zwei Teilarmen 39, 40. Die etwa gleich langen Teilarme 39, 40 sind im Bereich eines mittleren Gelenks 41 schwenkbar bzw. knickbar miteinander verbunden. Am freien Ende des äußeren Teilarms 40 ist ein steuerbares Drehlager 42 angeordnet. Alle Lager des Schwenkarms 19, nämlich das Drehlager 20, das Gelenk 41 und das Drehlager 42, sind hinsichtlich der Drehbewegungen steuerbar, zum Beispiel durch eine elektronische Achsensteuerung. Hierfür sind jeweils Servomotoren im Bereich der Drehlager bzw. Gelenke angeordnet.

Am freien Ende des Teilarms 40 ist ein nach unten gerichteter Hubkopf 43 als Aufnahmewerkzeug für die Gegenstände, nämlich für die Kartons 29, 30 angebracht. Es handelt sich dabei um einen Saugkopf. Dieser besteht aus einem plattenförmigen Tragorgan 44 mit Saugern 45 an der Unterseite. Die Sauger 45 erfassen einen Karton 29, 30 jeweils an dessen Oberseite. Der Karton 29, 30 kann so von der Kartonbahn 31..33 abgenommen und einer Palette 11 im Bereich eines Palettenplatzes 12..14 zugeführt werden.

Der Palettierer kann die Kartons 29, 30 nach einem programmierten Packmuster mit unterschiedlicher Orientierung auf den Paletten 11 absetzen. Dabei sind im vorliegenden Falle die Kartons 29, 30 mit ihrer Längserstreckung entweder in Abförderrichtung oder quer zu dieser orientiert. Kanten der Kartons 29, 30 sind jeweils parallel zu den Rändern der Paletten 11 gerichtet.

Der Hubkopf 43 ist nicht unmittelbar am Ende des Schwenkarms 19 im Bereich des Drehlagers 42 positioniert, sondern an einem bewegbaren, nämlich schwenkbaren Zwischenhalter, der hier als langgestreckter Tragarm 46 ausgebildet ist, mit einem Ende am Drehlager 42 angebracht, nämlich mit einem Wellenzapfen 47 desselben verbunden.

An dem zum Wellenzapfen 47 gegenüberliegenden Ende des Tragarms 46 ist der Hubkopf 43 bzw. dessen Tragorgan 44 seinerseits um eine vertikale Achse drehbar gelagert, und zwar über ein Wellenstück 48. Dieses ist mittig mit dem rechteckigen Tragorgan 44 verbunden. Über das Wellenstück 48 kann der Hubkopf 43 relativ zum Tragarm 46 um eine mittige Vertikalachse gedreht werden.

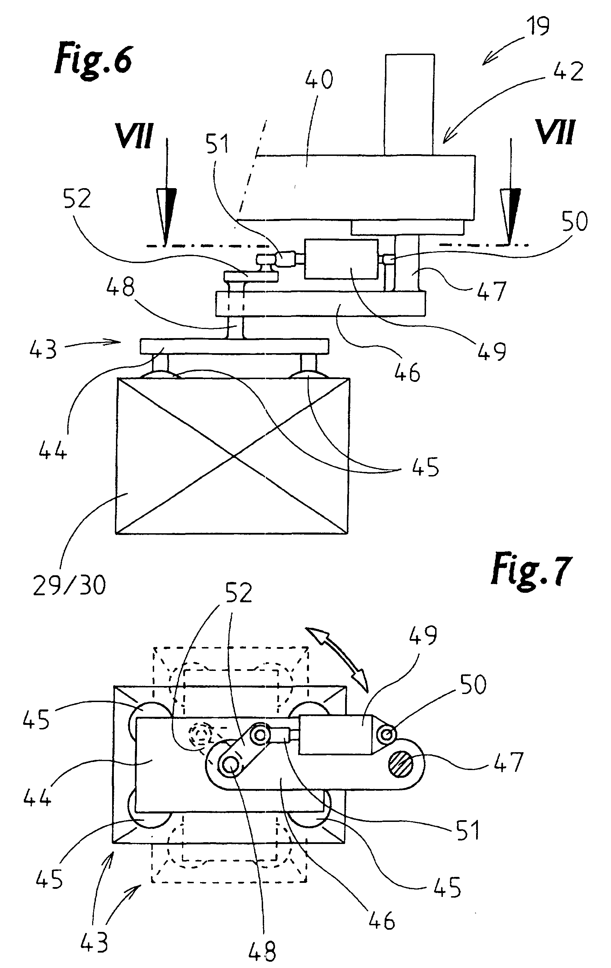

Die Drehbewegungen des Hubkopfes 43 sind bei diesem Ausführungsbeispiel nicht beliebig steuerbar. Vielmehr sind nur zwei Alternativstellungen möglich. In der einen Position erstreckt sich der Hubkopf 43 bzw. das Tragorgan 44 in Richtung des Tragarms 46 (ausgezogene Linien in Fig. 7). Die Alternativstellung ist hierzu quergerichtet (gestrichelt in Fig. 7).

Diese Betätigung des Hubkopfes 43 über das Wellenstück 48 erfolgt durch ein Betätigungsorgan, welches am Tragarm 46 selbst angebracht ist. An der Oberseite desselben befindet sich ein Betätigungszylinder 49, insbesondere ein Pneumatikzylinder. Dieser ist mit einem Ende in einem Festlager 50 schwenkbar gelagert. Eine Kolbenstange 51 ist schwenkbar mit einem Exzenter, nämlich einem Schwenkhebel 52 verbunden, der andererseits fest mit einem durch den Tragarm 46 hindurchtretenden Ende des Wellenstücks 48 verbunden ist.

Der Betätigungszylinder 49 ist derart steuerbar, daß der Schwenkhebel 52 in zwei Alternativstellungen bewegbar ist (ausgezogen und gestrichelt in Fig. 7). Entsprechende Längs- und Querstellungen ergeben sich für den Hubkopf 43.

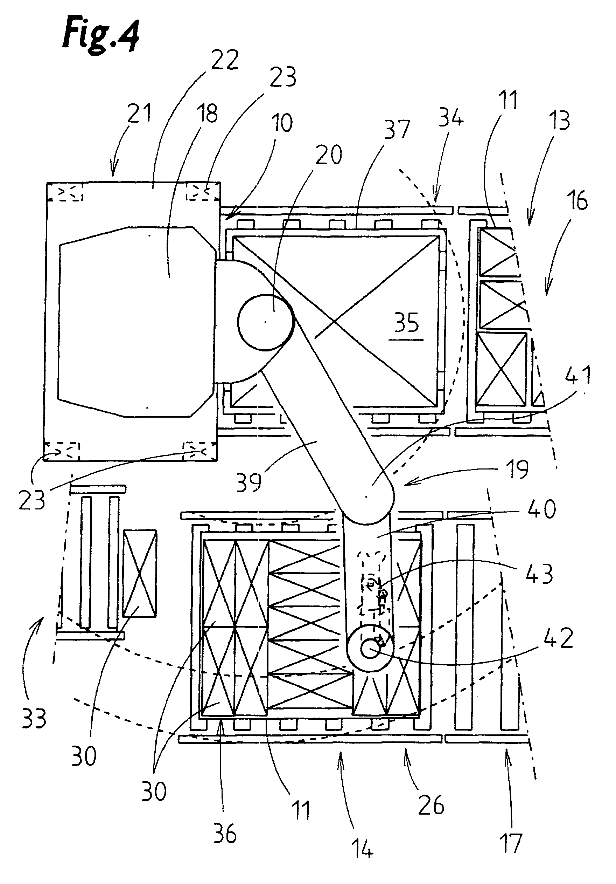

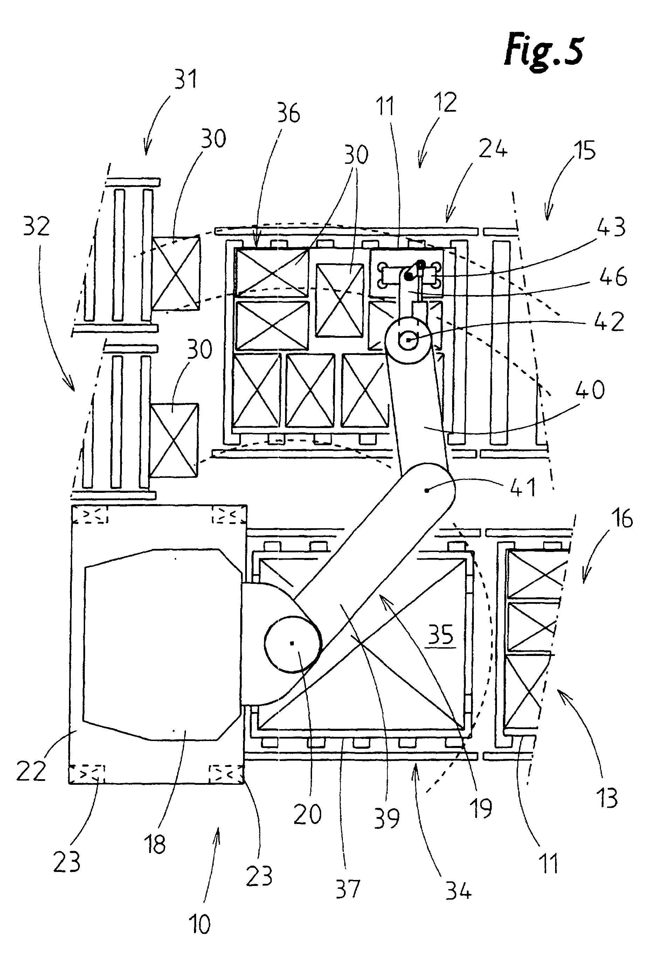

Durch diese Ausgestaltung des Palettierers 10 bzw. des Schwenkarms 19 ist es möglich, die unterschiedlichen Formationen von Kartons 29, 30 innerhalb der Lagen 36 für alle Paletten 11 in den Palettenplätzen 12..14 zu erreichen. Durch den Tragarm 46 kann - je nach Relativstellung - die wirksame Auslage des Schwenkarms 19 verringert oder vergrößert werden. Fig. 4 zeigt eine Position des Hubkopfes 43 bei verminderter wirksamer Länge des Schwenkarms 19. Dadurch können Kartons 29, 30 problemlos in einem dem Palettierer 10 zugekehrten Bereich auf der Palette 11 abgelegt werden. In der Stellung gemäß Fig. 5 befindet sich der Tragarm 46 in Verlängerung bzw. Fortsetzung des Teilarms 40. Hierbei können entferntliegende Bereiche einer Palette 11 erfaßt werden, und zwar bei erwünschter Relativstellung des Kartons 29, 30 durch entsprechende Stellung des Hubkopfes 43.

## Patentansprüche

1. Hubvorrichtung, insbesondere Palettierer (10), mit einem Schwenkarm (19) aus mindestens zwei schwenkbar miteinander verbundenen Teilarmen (39, 40) und einem Hubkopf (43), insbesondere Saugkopf, am freien Ende des Schwenkarms (19), wobei ein Tragarm (46) schwenkbar am Ende des Schwenkarms (19) gelagert ist und der Hubkopf (43) über ein Wellenstück (48) drehbar am freien Ende des Tragarms (46) gelagert ist, wobei weiterhin der Hubkopf (43) durch ein Betätigungsorgan drehbar ist, **dadurch gekennzeichnet, dass** der Hubkopf (43) durch einen am Tragarm (46) angeordneten Betätigungszylinder (49) drehbar ist, dessen Kolbenstange (51) über einen Schwenkhebel (52) mit dem am Tragarm (46) drehbar gelagerten Wellenstück (48) verbunden ist.

2. Hubvorrichtung nach Anspruch 1, **dadurch gekennzeichnet, dass** der rechteckige Hubkopf (43) alternativ in zwei um 90° versetzte Stellungen bewegbar ist, vorzugsweise in Längsrichtung des Tragarms (46) einerseits und in Querstellung anderseits.

3. Hubvorrichtung nach Anspruch 2 oder einem der weiteren Ansprüche, **dadurch gekennzeichnet, dass** das Wellenstück (48) vorzugsweise mittig mit der Oberseite des Hubkopfes (43) verbunden ist.

4. Hubvorrichtung nach Anspruch 1 oder einem der weiteren Ansprüche, **dadurch gekennzeichnet, dass** der Tragarm (46) unterhalb des Schwenkarms (19) bzw. des Teilarms (40) gelagert und in horizontaler Ebene beliebig schwenkbar ist.

5. Hubvorrichtung nach Anspruch 1 oder einem der weiteren Ansprüche, **dadurch gekennzeichnet, dass** der Palettierer (10) Teil einer Palettierstation ist, der Gegenstände, insbesondere Kartons (29, 30), auf mindestens drei parallelen Kartonbahnen (31, 32, 33) zuführbar und durch den Palettierer (10) nach programmierbarem Packmuster alternativ einer von mehreren Paletten (11) im Bereich von mehreren, insbesondere drei Palettenplätzen (12, 13, 14) zuführbar sind.

6. Hubvorrichtung nach Anspruch 5 oder einem der weiteren Ansprüche, **dadurch gekennzeichnet, dass** die Palettenplätze (12, 13, 14), je zur Beladung einer Palette (11), einer entsprechenden Anzahl von Abförderern (15, 16, 17) für beladene Paletten (11) zugeordnet sind, wobei die Abförderer (15, 16, 17) symmetrisch zum Palettierer (10) positioniert sind, derart, dass ein mittlerer Abförderer (16) mittig zum Palettierer (10) und die beiden weiteren Abförderer (15, 17) zu beiden Seiten mit gleichen Abständen vom mittleren Abförderer (16) positioniert sind.

7. Hubvorrichtung nach Anspruch 5 oder einem der weiteren Ansprüche, **dadurch gekennzeichnet, dass** im Bereich des Palettierers (10) eine Hilfsbahn (38) angeordnet ist zur Zuführung von Lagenpaletten (37) mit einem Vorrat an Zwischenlagen (35), wobei die Lagenpalette (37) auf der Hilfsbahn (38) unterhalb des Palettierers (10) verfahrbar und vorzugsweise durch eine Hilfsplattform (34) auf die Ebene der Abförderer (15, 16, 17) anhebbar ist.

## Claims

1. Lifting apparatus, in particular palletizer (10), having a pivoting arm (19) made of at least two pivotably interconnected sub-arms (39, 40) and a lifting head (43), in particular suction head, at the free end of the pivoting arm (19), a carrying arm (46) being mounted in a pivotable manner at the end of the pivoting arm (19) and the lifting head (43) being mounted at the free end of the carrying arm (46) such that it can be rotated via a shaft component (48), it also being possible for the lifting head (43) to be rotated by an actuating element, **characterized in that** the lifting head (43) can be rotated by an actuating cylinder (49) which is arranged on the carrying arm (46) and of which the piston rod (51) is connected, via a pivoting lever (52), to the shaft component (48), which is mounted in a rotatable manner on the carrying arm (46).

2. Lifting apparatus according to Claim 1, **characterized in that** the rectangular lifting head (43) can be moved alternatively into two positions which are offset through 90°, preferably in the longitudinal direction of the carrying arm (46), on the one hand, and in the transverse position, on the other hand.

3. Lifting apparatus according to Claim 2 or one of the further claims, **characterized in that** the shaft component (48) is preferably connected centrally to the top side of the lifting head (43).

4. Lifting apparatus according to Claim 1 or one of the further claims, **characterized in that** the carrying arm (46) is mounted beneath the pivoting arm (19) or the sub-arm (40) and can be pivoted as desired in the horizontal plane.

5. Lifting apparatus according to Claim 1 or one of the further claims, **characterized in that** the palletizer (10) is part of a palletizing station to which articles, in particular cartons (29, 30), can be fed on at least three parallel carton tracks (31, 32, 33) and can be fed by the palletizer (10), in accordance with programmable packaging patterns, alternatively to one of a plurality of pallets (11) in the region of a plurality of, in particular three, pallet locations (12, 13, 14).

6. Lifting apparatus according to Claim 5 or one of the further claims, **characterized in that** the pallet locations (12, 13, 14), each for loading one pallet (11), are assigned a corresponding number of removal conveyors (15, 16, 17) for loaded pallets, the removal conveyors (15, 16, 17) being positioned symmetrically in relation to the palletizer (10) such that a central removal conveyor (16) is positioned centrally in relation to the palletizer (10) and the two further removal conveyors (15, 17) are positioned on both sides of the central removal conveyor (16), at equal distances therefrom.

7. Lifting apparatus according to Claim 5 or one of the further claims, **characterized in that** arranged in the region of the palletizer (10) is an auxiliary track (38) for feeding layer pallets (37) with a supply of intermediate layers (35), it being possible to displace the layer pallets (37) on the auxiliary track (38) beneath the palletizer (10) and preferably to raise the same, by an auxiliary platform (34), onto the plane of the removal conveyors (15, 16, 17).

## Revendications

1. Dispositif élévateur, en particulier palettiseur (10), comprenant un bras pivotant (19) constitué d'au moins deux bras partiels articulés l'un à l'autre (39, 40) et une tête élévatrice (43), en particulier une tête aspirante, à l'extrémité libre du bras pivotant (19), un bras porteur (46) étant monté pivotant à l'extrémité du bras pivotant (19) et la tête élévatrice (43) étant montée tournante par un bout d'arbre (48) à l'extrémité libre du bras porteur (46), la tête élévatrice (43), en outre, pouvant être tournée par un organe de manoeuvre, **caractérisé par le fait que** la tête élévatrice (43) peut être tournée par un vérin de manoeuvre (49) placé sur le bras porteur (46) et dont la tige de piston (51) est reliée par un levier pivotant (52) au bout d'arbre (48) monté tournant sur le bras porteur (46).

2. Dispositif élévateur selon la revendication 1, **caractérisé par le fait que** la tête élévatrice, rectangulaire (43) peut être amenée alternativement dans deux positions à 90° l'une de l'autre, de préférence d'une part dans la direction longitudinale du bras porteur (46) et d'autre part dans une position transversale.

3. Dispositif élévateur selon la revendication 2 ou une des autres revendications, **caractérisé par le fait que** le bout d'arbre (48) est joint de préférence au milieu au côté supérieur de la tête élévatrice (43).

4. Dispositif élévateur selon la revendication 1 ou une des autres revendications, **caractérisé par le fait que** le bras porteur (46) est monté au-dessous du bras pivotant (19) ou du bras partiel (40) et peut pivoter à volonté dans un plan horizontal.

5. Dispositif élévateur selon la revendication 1 ou une des autres revendications, **caractérisé par le fait que** le palettiseur (10) fait partie d'un poste de palettisation auquel des objets, en particulier des cartons (29, 30), peuvent être amenés sur au moins trois voies à cartons parallèles (31, 32, 33) et amenés par le palettiseur (10), suivant un schéma de paquet programmable, alternativement à une de plusieurs palettes (11) dans la zone de plusieurs, en particulier trois, emplacements de palettes (12, 13, 14).

6. Dispositif élévateur selon la revendication 5 ou une des autres revendications, **caractérisé par le fait que** les emplacements de palettes (12, 13, 14), chacun pour le chargement d'une palette (11), sont associés à un nombre correspondant de transporteurs d'évacuation (15, 16, 17) pour des palettes (11) chargées, les transporteurs d'évacuation (15, 16, 17) étant placés symétriquement par rapport au palettiseur (10), de façon telle qu'un transporteur d'évacuation du milieu (16) soit placé au milieu par rapport au palettiseur (10) et les deux autres transporteurs d'évacuation (15, 17) soient placés de part et d'autre à égales distances du transporteur d'évacuation du milieu (16).

7. Dispositif élévateur selon la revendication 5 ou une des autres revendications, **caractérisé par le fait que** dans la zone du palettiseur (10) est prévue une voie auxiliaire (38) pour l'amenée de palettes à couches (37) portant une provision de couches intermédiaires (35), la palette à couches (37) étant mobile sur la voie auxiliaire (38) au-dessous du palettiseur (10) et pouvant être montée de préférence par une plate-forme auxiliaire (34) dans le plan des transporteurs d'évacuation (15, 16, 17).
